# EUROPEAN PATENT SPECIFICATION

(11) **EP 2 450 664 B1**
(45) Date of publication and mention of the grant of the patent: **30.04.2014**
(21) Application number: 10190580.0
(22) Date of filing: 09.11.2010
(51) Int. Cl.: G01B 21/16, G01B 3/26

(54) **Spacer determination**
Distanzscheibenbestimmung
Détermination d'espaceur d'un disque d'écartement

(43) Date of publication of application: 09.05.2012
(73) Proprietor: Vetys Lizenz-Verwaltungs GmbH, 50825 Köln (DE)
(72) Inventor: Naruse, Yutaka, Tokyo 202-0013 (JP)
(74) Representative: Lenzing Gerber Stute

(56) References cited:
- WO-A1-2010/070773
- DE-A1- 19 652 687
- "Hubcentric Ring Size Search", JustForWheels.com , 31 December 2008 (2008-12-31), XP002628658, Retrieved from the Internet: URL:http://replay.waybackmachine.org/20081 231115300/http://www.justforwheels.com/ind ex.jsp?cat=hubcentric&sub=searchsize [retrieved on 2011-03-16]
- "Hub Centric Rings", Prestigewheel.com , 11 February 2006 (2006-02-11), XP002628659, Retrieved from the Internet: URL:http://replay.waybackmachine.org/20060 211192940/http://www.prestigewheel.com/Cat alog/HubRings66_67.pdf [retrieved on 2011-03-17]

## Description

The present invention relates to a method for determining the exact spacer thickness to adjust the gap between a central wheel hole formed in the wheel, and the hub in a tire/wheel assembly (TWA).

Heretofore, most vehicles such as four-wheeled automobiles employ a structure in which a tire/wheel assembly (hereinafter referred to as TWA when appropriate) including a tire mounted on a wheel is fixed to an axle, specifically, a hub provided to the vehicle, by using multiple hub bolts (or hub nuts).

In such vehicles, it is important that the axis of an axle (hub) and the rotation axis of the TWA are coincident with each other when the TWA is mounted on the vehicle. In particular, it is to be supposed that a TWA is fixed to a hub in a state in which the rotation axis of the TWA is eccentric to the axis of the axle only by a slight amount. In this case, such a state causes vibration while the vehicle is running, specially, at high speed, even if the TWA includes a well-balanced wheel and a tire mounted precisely on a rim.

In this respect, various methods of fixing a TWA to a hub in a state in which the axis of the axle and the rotation axis of the TWA are made coincident with each other have been proposed. For example, a method using a vibrator that provides cyclical vibrations to a TWA while clamping a tire portion of the TWA is known. According to such a method, the vibrations provided to the TWA cause the TWA to easily move up, down, left and right at a contact surface of the wheel and a hub bolt (or hub nut) when the TWA is mounted on the hub. It is thus made possible to reduce the possibility that a TWA is fixed to a hub in the state in which the rotation axis of the TWA is eccentric to the axis of the axle.

The WO 2010/070773 A1 describes several fixing support device used in fixing a tire/wheel assembly to a hub of a vehicle by using multiple hub bolts or the like, and also to a tire/wheel assembly fixing method using the fixing support device.

The WO 2010/070773 A1 discloses three different embodiments: The first embodiment is summarized as a tire/wheel assembly (TWA) fixing system for fixing a TWA including a tire mounted on a wheel to a hub of a vehicle by using a fastening device (hub bolt, for example), the TWA fixing system including a fixing support device (hub collar) attached to the wheel. In the TWA fixing system, the essential fixing support is an annular hub ring portion which fits into a hub hole formed in a rotation axis portion of the wheel and into which the hub is inserted. The second embodiment is summarized as a tire/wheel assembly (TWA) fixing method for fixing a TWA including a tire mounted on a wheel to a hub of a vehicle by using a fastening device, the method including the steps of: temporarily fixing the TWA to the hub in a state in which the TWA is movable; inserting a thin plate-like spacer corresponding to a dimension of a gap formed between a hub hole formed in the wheel, which fits into the hub, and the hub; and inserting the fastening device into an attachment hole for the vehicle, which is formed in the wheel, and then fixing the TWA to the hub by screwing the fastening device to a hub-side screw portion formed in the hub. The third embodiment of this citation is summarized as a fixing support device (wheel guide, for example) used in fixing a TWA including a tire mounted on a wheel to a hub of a vehicle, the device including: a device-side screw portion configured to be screwed to a hub-side screw portion (bolt hole) formed in the hub; and a wheel guide unit (wheel guide unit, for example) formed outward of the device-side screw portion in a vehicle width direction with the device-side screw portion being screwed to the hub-side screw portion.

With respect to the second embodiment of the WO 2010/070773 A1 the determination of the exact backlash compensation is only possible provided that the tire is mounted on a wheel to a hub of a vehicle by using fastening devices. Thus, a precondition according to the WO 2010/070773 A1 is a pre-mounting of a tire mounted on a wheel to a hub of a vehicle. The method provided according to this embodiment is not transferable to an industrial process (for example using OEM TWA in the automotive industry) for compensating the tolerance without temporarily fixing the TWA to the hub in a state in which the TWA is movable.

The object of the present invention is a method for a simple determination of an appropriate backlash compensation for the gap formed between a hub hole formed in the wheel, which fits into the hub, and the hub, which can be easily adapted to an industrial scale, i.e. to a process which can be used in the automotive industry.

The object of the present invention is accomplished in accordance with a method for fixing a tire wheel assembly to a hub of a vehicle, the method comprising the steps of:
a. Determining a gap formed between a central wheel hole formed in said wheel, which fits into said hub, and said hub, comprising the following steps:
   aa. Measuring an inner diameter of said central wheel hole when said tire is mounted on the wheel but dismounted from the hub;
   ab. Measuring the outer diameter of the hub when the wheel is dismounted from said hub;
   ac. Determining the difference between said inner diameter and said outer diameter;
   ad. Determining the exact thickness of a backlash compensation which corresponds to the half of the difference between said inner diameter and said outer diameter;
   wherein the tolerance of measuring said inner and outer diameters is less than 0.01 mm each;
b. using a spacer when fixing said tire wheel assembly to the hub and for compensating said gap between the central wheel hole and the hub, wherein the spacer has a thickness which is equal to the determined backlash compensation thickness with a tolerance of the spacer thickness being less than half of the tolerance of the measuring of the inner diameter of the central wheel and the outer diameter of the hub.

The improvement when using the method according to the invention is a higher precision tyre mount work in a shorter time compared with the tools and methods of the prior art.

In a further special embodiment of the present invention the tolerance of measuring the inner and outer diameters is less than 0.001 mm each.

A tolerance when measuring the inner and outer diameter of more or equal than 0.03 mm each leads to significant vibrations resulting from a non-compensable adjustment of the wheel hole on the hub.

Such a tolerance leads to an important issue with respect to safety and comfort of all cars, especially high-performance or racing cars.

In a special embodiment of the present invention, measuring of the inner diameter of the central wheel hole formed in the wheel - when the tire is mounted on a wheel but dismounted from a hub of a vehicle - is done using a tool having an outer insertion end to evaluate the diameter of the inner diameter of the central wheel hole by finding the tool with the thickest insertion end just fitting into the inner diameter of the central wheel hole. This simple evaluation of the inner diameter of the central wheel hole is the first step of the method according to the invention. After this first step, measuring the outer diameter of the hub is done by finding the tool with the thinnest inner insertion end just fitting above the outer diameter of the hub.

When subtracting the outer diameter of the hub from the inner diameter of the central wheel hole formed in the wheel when the tire is mounted on a wheel but dismounted to a hub of a vehicle, the exact spacer thickness to adjust the gap between a central wheel hole formed in the wheel and the hub in a tire/wheel assembly (TWA) can easily be calculated, i.e. the half of the difference of said diameters.

Any appropriate spacers for compensating the gap between a central wheel hole formed in the wheel and the hub in a tire/wheel assembly (TWA) can be used according for this invention. It has to be observed that the material of the chosen spacer assures a fixation of the TWA to a hub in such a state in which the rotation axis of the TWA is never eccentric to the axis of the axle only by a slight amount, i.e. the material should present an appropriate compressive strength. With respect to the desired tolerance, the tolerance of the spacer thickness should be not more than half of the tolerance of the measuring of inner diameter of the central wheel hole and the outer diameter of the hub. According to a preferred embodiment of this invention the tolerance of the spacer thickness is less than 0.005 mm. Only these limited tolerances result in a TWA, which will show at no state vibration while the vehicle is running, even, at high speed.

Especially suitable spacers, shim sheets or annular rings are disclosed in the WO 2010/070773 A1.

The measuring of the said diameters within the needed precision can be done by all appropriate tools. Such a tool can be very simple, providing a cylindrical portion with the needed tolerance and a length of this cylindrical portion which is sufficient for a simple measurement.

In a further special embodiment of the present invention the tool for determining outer diameter of the hub and/or the tool for determining the inner diameter of the central wheel hole comprises a groove which makes it easily to hold the aforementioned tools.

In a very special embodiment of the present invention the tool comprises as well an insertion end for determining the outer diameter of the hub as also an insertion end for determining the inner diameter of the central wheel hole. According to such an embodiment the total number of tools provided for the method according to the invention would be halved.

The calculation of the exact spacer thickness to adjust the gap between a central wheel hole formed in the wheel, and the hub in a tire/wheel assembly (TWA), can be done by various common methods.

One method is to evaluate the exact difference when comparing the dimensions of the inner and outer diameters with a table to get exact diameter with respect to the tolerance of the used tools.

Obviously, the comparison can also be done by an implementation of an algorithm conducted - for example - by a microprocessor.

Otherwise, colored markings could also be used to recognize the exact diameter of the tool actually used.

Examples of suitable tools according to this invention are shown in figure 1 and 2. A simple procedure for determining the gap according to the invention is shown in figure 3.

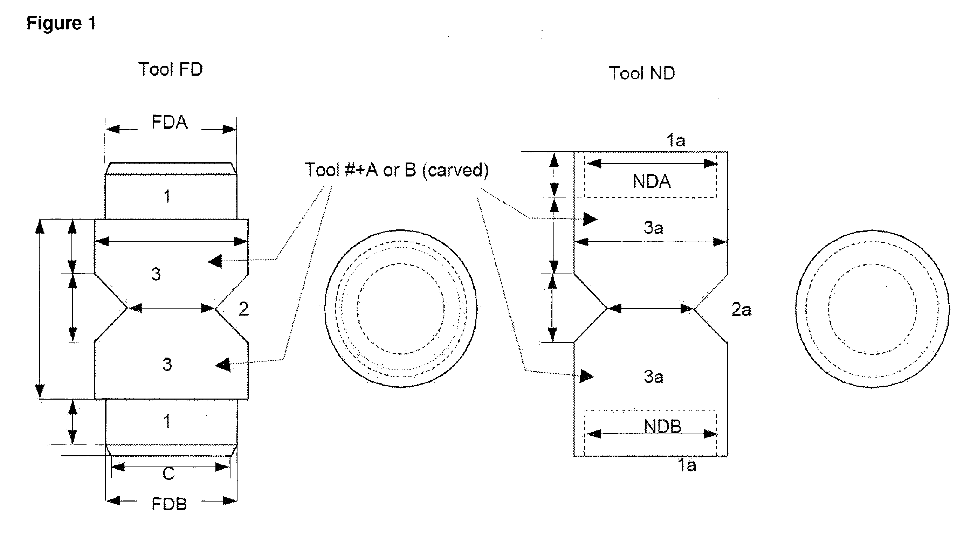

Figure 1 shows appropriate tools for applying a method according to the invention. The tool FD is to be used for measuring the inner diameter of the central wheel hole formed in the wheel when the tire is mounted on a wheel but dismounted to a hub of a vehicle. 1 represents the cylindrical portion with a predetermined diameter and the needed tolerance and a length of this cylindrical portion which is sufficient for a simple measurement. The tool FD provides two outer insertion ends for measuring the inner diameter of the central wheel hole. Thus, the diameter of the two outer insertion ends FDA and FDB are different to minimize the number of tools.

The tool ND is to be used for measuring the outer diameter of the hub when the wheel of a vehicle is dismounted to said hub. This tool has also two inner insertion ends NDA and NDB for measuring and having different diameters to minimize also the number of tools.

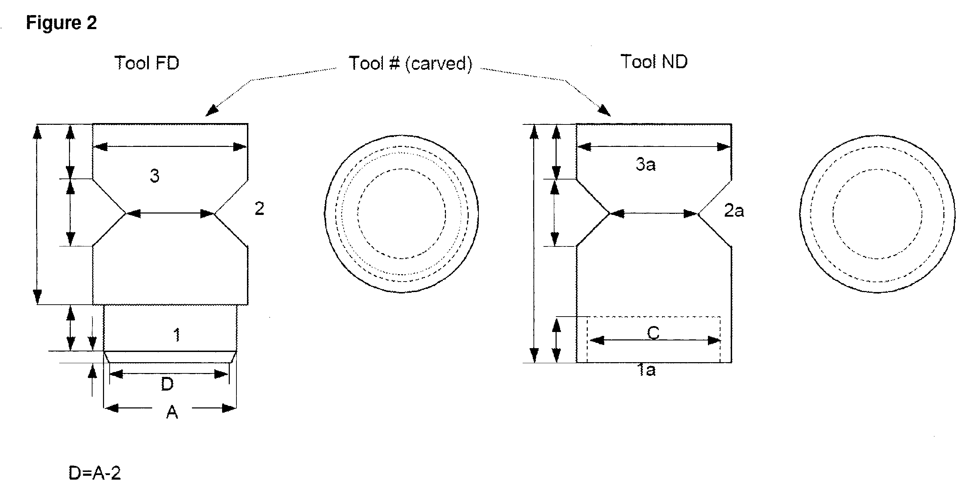

Figure 2 shows very simple tools which are comparable to the ones from figure 1 but with only one end for the inner and the outer diameter respectively.

Nevertheless, it is also possible to provide one tool with two different types of ends, one end for measuring the inner diameter of the central wheel hole and the other measuring the outer diameter of the hub.

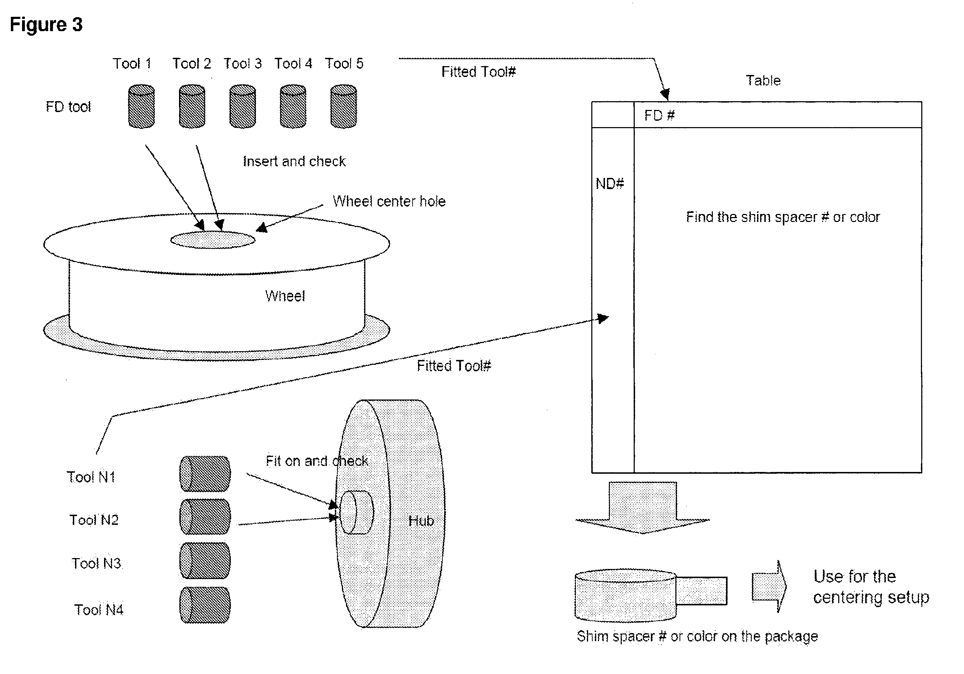

Figure 3 shows how to use which tools and how to determine the correct shim spacer, i.e. a spacer with the needed thickness and tolerance according to the invention.

The tools 1 to 4 and N1 to N2 have all different diameters. The table shows the needed spacer thickness, calculated as described hereinabove.

## Claims

1. Method for fixing a tire wheel assembly to a hub of a vehicle, the method comprising the steps of:
a. Determining a gap formed between a central wheel hole formed In said wheel, which fits into said hub, and said hub, comprising the following steps:
aa. Measuring an inner diameter of said central wheel hole when said tire is mounted on the wheel but dismounted from the hub;
ab. Measurlng the outer diameter of the hub when the wheel is dis-mounted from sald hub;
ac. Determining the difference between said Inner diameter and said outer diameters;
ad. Determining the exact thickness of a backlash compensation which corresponds to the half of the difference between said Inner diameter and said outer diameter;
wherein the tolerance of measuring said Inner and outer diameters Is less than 0.01 mm each;
b. using a spacer when fixing said tire wheel assembly to the hub and for compensating said gap between the central wheel hole and the hub, wherein the spacer has a thickness which is equal to the determined backlash compensation thickness with a tolerance of the spacer thickness being less than half of the tolerance of the measuring of the inner diameter of the central wheel and the outer diameter of the hub.

2. Method according to claim 1, characterlsed In that the tolerance of measuring the inner and outer diameters is less than 0.001 mm each.

## Patentansprüche

1. Verfahren zum Befestigen einer Rad/Reifen-Anordnung an eine Nabe eines Fahrzeugs mit den folgenden Verfahrensschritten:
a. Ermitteln eines Abstands zwischen einem zentralem Radloch, das in dem Rad ausgebildet ist und auf die Nabe passt, und der Nabe, mit den folgenden Schritten:
aa. Messen eines Innendurchmessers des zentralen Radlochs, wenn der Reifen auf dem Rad montiert, aber von der Nabe abmontiert ist;
ab. Messen des Außendurchmessers der Nabe, wenn das Rad von der Nabe abmontiert ist;
ac. Ermitteln der Differenz zwischen dem Innendurchmesser und dem Außendurchmesser;
ad. Ermitteln der exakten Dicke eines Spielausgleichs, die der Hälfte der Differenz zwischen dem Innendurchmesser und dem Außendurchmesser entspricht;
wobei die Toleranz beim Messen der inneren und äußeren Durchmesser jeweils geringer als 0,01 mm ist;
b. Verwenden eines Abstandshalters, während die Reifen/Rad-Anordnung auf der Nabe befestigt wird, zum Kompensieren des Abstands zwischen dem zentralen Radloch und der Nabe, wobei der Abstandshalter eine Dicke hat, die gleich der ermittelten Dicke des Spielausgleichs ist, mit einer Toleranz der Dicke des Abstandshalters, die geringer als die Hälfte der Toleranz beim Messen des Innendurchmessers des zentralen Radlochs und des Außendurchmessers der Nabe ist.

2. Verfahren nach Anspruch 1, **dadurch gekennzeichnet, dass** die Toleranz beim Messen der inneren und äußeren Durchmesser jeweils weniger als 0,001 mm ist.

## Revendications

1. Procédé de fixation d'un ensemble pneumatique-roue à un moyeu d'un véhicule, le procédé comprenant les étapes consistant à :
a. Déterminer un écart formé entre un trou central de roue formé dans ladite roue, qui s'ajuste sur ledit moyeu, et ledit moyeu, comprenant les étapes suivantes :
aa. Mesurer un diamètre interne dudit trou central de roue lorsque ledit pneumatique est monté sur la roue mais démonté par rapport au moyeu,
ab. Mesurer le diamètre externe du moyeu lorsque la roue est démontée par rapport audit moyeu,
ac. Déterminer la différence entre ledit diamètre interne et ledit diamètre externe,
ad. Déterminer l'épaisseur exacte d'une compensation du jeu qui correspond à la moitié de la différence entre ledit diamètre interne et ledit diamètre externe,
dans lequel la tolérance de mesure desdits diamètres interne et externe est inférieure à 0,01 mm chacune,
b. Utiliser une pièce d'écartement lors de la fixation dudit ensemble pneumatique-roue sur le moyeu et pour compenser ledit écart entre le trou central de roue et le moyeu, où la pièce d'écartement présente une épaisseur qui est égale à l'épaisseur de compensation du jeu déterminée avec une tolérance de l'épaisseur de la pièce d'écartement qui est inférieure à la moitié de la tolérance de la mesure du diamètre interne du trou central de roue et du diamètre externe du moyeu.

2. Procédé selon la revendication 1, **caractérisé en ce que** la tolérance de mesure des diamètres interne et externe est inférieure à 0,001 mm chacune.
